(19) Europäisches Patentamt
European Patent Office
Office européen des brevets

(11) Numéro de publication : 0 307 992 B1

# (12) FASCICULE DE BREVET EUROPEEN

(45) Date de publication du fascicule du brevet : **06.11.91 Bulletin 91/45**

(51) Int. Cl.$^5$ : **A01N 63/00,** A01N 25/22, A01N 25/04, // (A01N63/00, 43:80)

(21) Numéro de dépôt : **88201872.4**

(22) Date de dépôt : **02.09.88**

## (54) Compositions contenant des produits pesticides biosynthétiques, procédés pour leur production et leur utilisation.

(30) Priorité : **14.09.87 FR 8712738**

(43) Date de publication de la demande : **22.03.89 Bulletin 89/12**

(45) Mention de la délivrance du brevet : **06.11.91 Bulletin 91/45**

(84) Etats contractants désignés : **AT BE CH DE ES GB GR IT LI LU NL SE**

(56) Documents cités :
**CH-A- 428 313**
**FR-A- 1 393 646**
**FR-A- 2 552 627**
**GB-A- 884 541**
**CHEMICAL ABSTRACTS, vol. 95, no. 17, 26 octobre 1981, page 507, résumé no. 148814a, Columbus, Ohio, US; U.S. ENVIRONMENTAL PROTECTION AGENCY: "Exemptions from tolerances for pesticide chemicals in or on raw agricultural commodities; 1,2-benzisothiazolin-3-one", & FED. REGIST. 02 SEP. 1981, 46(170), 43971-2**

(73) Titulaire : **SOLVAY & Cie (Société Anonyme)**
**Rue du Prince Albert, 33**
**B-1050 Bruxelles (BE)**

(72) Inventeur : **Gago, Ignace**
**Chaussée de Nivelles 53**
**B-1420 Braine-L'Alleud (BE)**
Inventeur : **Charmoille, Lucien**
**rue Vervloesem 159**
**B-1200 Bruxelles (BE)**
Inventeur : **Detroz, René**
**Chaussée de Louvain 534**
**B-1328 Ohain (BE)**

(74) Mandataire : **Lechien, Monique et al**
**Solvay & Cie S.A. Département de la Propriété Industrielle Rue de Ransbeek, 310**
**B-1120 Bruxelles (BE)**

**EP 0 307 992 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des compositions contenant des produits pesticides biosynthétiques ainsi que des procédés pour leur production et leur utilisation.

Les produits pesticides biosynthétiques présentent de nombreux avantages par rapport aux pesticides chimiques, notamment du fait de leur grande spécificité. Ainsi, les pesticides biosynthétiques toxiques ou pathogènes pour des insectes sont en général non toxiques et non pathogènes pour l'homme et les autres êtres vivants. En outre, vu leur spécificité, il ne mettent en général pas en danger les prédateurs et parasites naturels des insectes que l'on désire éliminer, ni les insectes bénéfiques. Ils ne sont pas phytotoxiques et ne laissent aucun résidu toxique. Enfin, les insectes ne paraissent pas développer une résistance à ce type de pesticides, contrairement à ce qui se passe lors de l'utilisation d'insecticides organiques de synthèse.

Les pesticides biosynthétiques peuvent être obtenus à partir de microorganismes très divers. Des classes de pesticides biosynthétiques des plus couramment utilisés dans la lutte contre certains insectes sont obtenues à partir de Bacillus thuringiensis et de Bacillus sphaericus dont on connaît de nombreuses variétés.

Les pesticides biosynthétiques n'étant en général pas solubles, ils nécessitent la mise en oeuvre de techniques particulières pour leur application. Ils peuvent se présenter sous forme de particules solides sèches ou sous forme de suspensions de particules solides dans un liquide adéquat. En général, ils sont mis en oeuvre sous forme de suspensions que l'on pulvérise sur les zones infestées selon diverses techniques connues en elles-mêmes. Une technique fréquemment utilisée pour traiter de grandes surfaces telles que des forêts ou des grandes étendues de terres cultivées ou encore de grandes étendues d'eau, de marécages ou de rivières consiste à pulvériser par voie aérienne des suspensions de pesticides biosynthétiques.

Dans le brevet US 3087865, on a proposé de préparer une composition pesticide biosynthétique qui contient des spores, des corps d'inclusion (cristaux) et les toxines solubles provenant de microorganismes du genre Bacillus tels que le Bacillus thuringiensis. Ces compositions peuvent se présenter sous forme de suspensions ou de poudres sèches. On peut ainsi utiliser la poudre obtenue par séchage du gâteau de filtration du produit de fermentation (poudre) éventuellement dispersée dans de l'eau (crème) ou un concentré du milieu de fermentation (pâte). Les compositions se présentant sous forme liquide (suspensions) peuvent entre autres contenir un fongicide ou un bactéricide compatible avec le pesticide biosynthétique.

De même, on a proposé dans le brevet FR 1393646 d'ajouter des agents bactéricides, tels que le xylène, ou des composés bactériostatiques à des compositions pesticides biosynthétiques dont le pH est ajusté entre 5,5 et 3,5.

Cependant, jusqu'à présent, cette addition d'agents bactéricides ou bactériostatiques connus, bien qu'ayant donné de bons résultats quant à l'effet bactéricide obtenu, n'a pas permis de résoudre des problèmes critiques nécessaires à l'obtention de bonnes compositions utilisables sur le terrain. Ainsi, il n'a pas été possible avec les agents bactéricides connus de préparer des compositions stables, conservant une bonne activité au cours du stockage et qui simultanément permettent d'inhiber le dégagement d'odeurs désagréables qui se produisent lors du stockage des suspensions ni d'arrêter le gonflement ou la rétraction des fûts contenant les compositions pesticides biosynthétiques. De même, il n'a pas été possible de mettre en oeuvre les produits pesticides biosynthétiques à n'importe quel pH, tel qu'un pH neutre, légèrement acide ou légèrement basique, malgré l'addition d'un agent bactéricide ou bactériostatique. Par ailleurs, l'addition de certains composés, tels que le xylène dans les compositions biosynthétiques, a été fortement déconseillée parce que conduisant à des compositions toxiques pour les animaux à sang chaud et/ou froid.

La présente invention vise à procurer des compositions contenant des produits pesticides biosynthétiques ne présentant pas les inconvénients des compositions connues. Elle vise à procurer des compositions de produits pesticides biosynthétiques qui sont stables, qui conservent une bonne activité au cours du stockage, quine présentent pas de dégagement gazeux, dont la couleur et la viscosité n'évoluent pas dans le temps ; les fûts contenant ces compositions ne gonflent pas ou ne se rétractent pas, même après un temps de stockage assez long à température ambiante ou lorsque le produit pesticide biosynthétique a un pH neutre, légèrement acide ou légèrement basique. Elle vise également à procurer des compositions aptes à recevoir l'agrément des départements officiels de l'agriculture parce que non toxiques en pratique pour les animaux à sang chaud et/ou froid.

L'invention concerne à cet effet des compositions contenant des produits pesticides biosynthétiques, sous la forme de microorganismes viables, sous forme de particules solides en suspension dans un liquide, caractérisées en ce qu'elles contiennent au moins de 0,001 à 10 pour mille en poids de celui des produits pesticides biosynthétiques d'une substance de formule générale (I) :

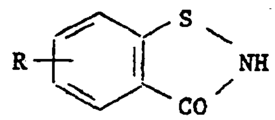

(I)

dans laquelle R représente un hydrogène, un halogène, ou un sel dérivant de cette substance. Dans ce cas, on opère de préférence avec des sels de métaux alcalins, d'ammonium ou de bases organiques, ou un radical contenant un atome d'azote.

Les substances ainsi définies protègent contre la contamination et l'altération par des microorganismes les produits pesticides biosynthétiques ; elles ont une fonction bactéricide ou au moins bactériostatique empêchant ou arrêtant la prolifération des microorganismes tels que des bactéries.

De manière préférée, R représente l'hydrogène, le chlore, le brome ou un sel dérivant de la substance, notamment un sel d'un métal alcalin tel que le sodium ou le potassium, un sel d'ammonium ou un sel d'une base organique telle que la triéthanolamine.

De manière particulièrement préférée, R représente l'hydrogène ou le chlore. Une substance selon l'invention ayant donné de bons résultats est la 1,2-benzisothiazolone-3 (1,2-benzisothiazoline-3-one).

Dans les compositions selon l'invention, la substance est présente à des doses variables compatibles avec le produit pesticide biosynthétique particulier mis en oeuvre. En général, son poids est compris entre 0,001 et 10 pour mille de celui du produit pesticide biosynthétique mis en oeuvre. Habituellement, son poids est compris entre 0,01 et 5 pour mille et de préférence entre 0,1 et 2 pour mille de celui du produit pesticide biosynthétique mis en oeuvre.

Les compositions selon l'invention sous forme de suspension dans un liquide contenant de l'eau ont une durée de conservation élevée dans une zone de pH comprise entre 3,5 et 8,5.

Plus particulièrement, les compositions de l'invention sont utilisables dans des zones de pH acides comprises entre des pH de 3,5 et 6,5, des zones de pH neutres comprises entre des pH de 6,5 et 7,5 et des zones de pH basiques comprises entre des pH de 7,5 et 8,5. Il résulte de cette situation que les compositions de l'invention peuvent être mises en oeuvre en ajustant le pH à des valeurs situées dans l'une quelconque des zones précitées. Par ailleurs, cette situation permet d'obtenir des compositions stables dont le pH peut évoluer librement sans qu'il faille prendre des mesures drastiques pour fixer le pH dans le temps. En bref, il résulte de cette situation que les compositions selon l'invention peuvent être conservées dans danger plus longtemps que les compositions connues antérieurement.

Par produits pesticides biosynthétiques, on entend désigner les produits pesticides biosynthétiques qui permettent de lutter contre les parasites animaux et végétaux de l'homme, des animaux et des végétaux (à l'exclusion des microorganismes provoquant les maladies de l'homme et des animaux) et contre les agents vecteurs de maladies parasitaires et virales. Ces pesticides biosynthétiques, également appelés biopesticides peuvent avoir ainsi une action fongistatique ou fongicide, appelée également action anticryptogamique, une action herbicide ou encore une action contre les arthropodes et plus particulièrement contre les insectes. L'invention s'applique tout particulièrement aux pesticides biosynthétiques ayant une action insecticide ou anticryptogamique. De bons résultats ont été obtenus avec des pesticides biosynthétiques ayant une action insecticide.

Ces pesticides biosynthétiques peuvent provenir de divers types d'organismes pathogènes tels que les microorganismes (virus, fungi, protozoaires et bactéries) et les nématodes. Ils peuvent également provenir de microorganismes quelconques transformés par insertion d'ADN codant pour la fabrication de toxines et provenant de microorganismes pathogènes.

Les pesticides biosynthétiques peuvent se trouver dans les compositions concentrées selon l'invention sous des formes très diverses. Ainsi, ils peuvent se présenter sous la forme des organismes eux-mêmes à un stade quelconque de leur évolution, en ce comprises les formes végétatives éventuelles, tels quels, en association avec leur milieu de culture, sous forme totalement ou partiellement lysée, sous forme totalement ou partiellement sporulée, sous une forme ayant libéré partiellement ou totalement les spores par divers moyens tels que l'autolyse bactérienne, ou sous la forme des produits qui sont excrétés spontanément par les organismes tels que les exotoxines, sous la forme des produits que l'on peut extraire de ces organismes tels que les endotoxines par toute méthode connue en elle-même impliquant ou non une lyse de l'organisme en cause, sous la forme des produits éventuellement libérés par les organismes au cours de certaines étapes de leur évolution (cristaux ou endotoxines associés ou non aux spores) ou encore sous plusieurs de ces formes simultanément.

Ces différentes formes peuvent éventuellement être associées à des résidus du milieu de culture. De bons résultats ont été obtenus avec le mélange contenant les spores, les cristaux ou les endotoxines associés et éventuellement des exotoxines qui se forment spontanément lors de l'autolyse de la bactérie en fin de sporulation. Un tel mélange peut contenir, outre les spores, les cristaux associés ou non aux spores et les exotoxines éventuelles, des cellules ou des débris de cellules ainsi que des produits solides résiduaires du milieu nutritif mis en oeuvre lors de la culture.

Comme microorganismes bactériens convenant bien en général comme source de pesticides biosynthétiques, on peut signaler les eubactériales de la classe des sporulales et plus particulièrement celles de l'ordre des bacillales telles que les Bacillacées (par exemple le genre Bacillus). Parmi ceux-ci, conviennent particulièrement bien les microorganismes bactériens du genre Bacillus tels que le Bacillus thuringiensis, le Bacillus sphaericus, le Bacillus popilliae, le Bacillus cereus, le Bacillus larvae, le Bacillus lentimorbus, le Bacillus fribourgensis, et le Bacillus penetrans.

De bons résultats ont été obtenus avec les Bacillus sphaericus et les Bacillus thuringiensis de tous sérotypes et plus particulièrement les Bacillus sphaericus de sérotypes 1a, 2a2b, 2a2c, 5a5b, 25, 26a26b, 26a26c et les Bacillus thuringiensis de sérotypes 1, 3a, 3a3b, 4, 6, 7, 8, 8a8b, 9, 10 et 14. Les meilleurs résultats ont été obtenus avec le Bacillus sphaericus de sérotypes 5a5b et 25 et les Bacillus thuringiensis de sérotypes 1 (variété thuringiensis), 3a3b (variété kurstaki), 6 (variété entomocidus), 7 (variété aizawa), 8a8b (variété morrisoni) et 14 (variété israëlensis). Les divers types de Bacillus thuringiensis et de Bacillus sphaericus peuvent être mis en oeuvre dans les compositions selon l'invention sous forme des microorganismes eux-mêmes, tels quels ou lysés, de leurs spores, des endotoxines ou des cristaux associés ou non à leurs spores ou sous plusieurs de ces formes. Ces différentes formes peuvent éventuellement être associées à des résidus du milieu de culture. De bons résultats ont été obtenus en utilisant le mélange contenant des spores et les cristaux associés qui se forme spontanément lors de l'autolyse de la bactérie en fin de sporulation. Un tel mélange peut contenir, outre les spores et les cristaux associés ou non aux spores, des cellules ou des débris de cellules ainsi que des produits solides résiduaires du milieu nutritif mis en oeuvre lors de la culture.

Les compositions selon l'invention peuvent contenir des quantités variables de pesticides biosynthétiques. En général, elles contiennent au moins 3% et le plus souvent au moins 5% en poids de pesticides biosynthétiques. Leur teneur en pesticides biosynthétiques ne dépasse en général pas 90% et le plus souvent pas 80% de leur poids sans que ces valeurs ne soient critiques.

Les compositions selon l'invention peuvent contenir en outre divers autres additifs dont la nature et la fonction dépendent de l'utilisation de ces compositions. Elles peuvent contenir des parfums ou des masques d'odeurs, des préservatifs de divers types tels que des antioxydants, notamment le BHT (butylhydroxytoluène) et le parahydroxybenzoate de méthyle, des sucres tel que le sorbitol et des agents susceptibles d'absorber les rayonnements ultra-violets (qui pourraient éventuellement causer la désactivation du pesticide biosynthétique), des charges, des agents régulateurs de pH, des adhésifs, des collants, des appâts, des corps gras, des agents tensioactifs, des agents dispersants ou émulsifiants tels que des amines, notamment la morpholine, la diéthanolamine ou la triéthanolamine. Elles peuvent aussi contenir des pesticides organiques de synthèse (pesticides chimiques). En général, les additifs comprennant au moins un préservatif et au moins un régulateur de pH. Les préservatifs sont en général des composés organiques.

On choisit le plus souvent des additifs qui sont solubles ou dispersibles dans le solvant constitutif de la phase liquide. En général, on choisit des additifs qui sont solubles ou dispersibles dans l'eau.

Les divers additifs sont en général présents en quantités ne dépassant pas le poids de pesticides biosynthétiques. Le plus souvent, ils sont présents en quantités de 0,01 à 50% du poids des pesticides biosynthétiques.

Les compositions selon l'invention peuvent également contenir des résidus de la fabrication du pesticide biosynthétique.

Les compositions selon l'invention se présentent sous forme de suspensions dans un liquide. Ce dernier doit être inerte vis-à-vis des pesticides biosynthétiques et il ne doit notamment pas les désactiver ni provoquer leur coagulation ni toute autre altération physique. Le liquide peut être constitué par un solvant unique ou par un mélange de solvants. En général, le solvant contient de l'eau.

De bons résultats ont été obtenus lorsque le solvant contient au moins 75% et le plus souvent au moins 90% en poids d'eau. En général, le liquide présent dans la composition selon l'invention est constitué essentiellement d'eau. Les autres solvants éventuels sont le plus souvent les solvants éventuels des agents tensioactifs ou les solvants éventuels des autres additifs. Il s'agit en général de solvants usuels tels que les alcools et plus particulièrement les alcools ayant de 1 à 7 atomes de carbones, tel que notamment le méthanol et l'éthanol.

Les compositions selon l'invention contiennent en général un ou des acides tels que l'acide tartrique, l'acide malique, l'acide citrique, l'acide phosphorique, l'acide propionique, l'acide ascorbique, l'acide sorbique, l'acide oléique, ou un mélange de deux ou plusieurs de ces acides. De bons résultats ont été obtenus avec l'acide citrique, l'acide phosphorique et l'acide propionique seul ou en mélange. Généralement, on met en oeuvre de 50 à 0,1 pour mille d'acides en poids de celui des produits pesticides biosynthétiques.

Les compositions selon l'invention peuvent également contenir des substances ayant une action fongicide

ou fongistatique. De bons résultats ont été obtenus avec le parahydroxybenzoate de méthyle, l'orthophénylphénol et l'acide propionique, ceux-ci peuvent être mis en oeuvre seul ou en mélange. Généralement, ils sont mis en oeuvre à raison de 0,001 à 10 pour mille en poids de celui des produits pesticides biosynthétiques.

Les compositions selon l'invention se présentent de manière avantageuse sous la forme d'une suspension de particules solides de produits pesticides biosynthétiques dans un liquide. Ces suspensions contiennent en général de 2 à 40% en poids et le plus souvent de 3 à 30% en poids de produits pesticides biosynthétiques et de 60 à 98% en poids et le plus souvent de 70 à 97% en poids de liquide.

La présente invention concerne également des procédés pour la fabrication des compositions selon l'invention.

La substance selon l'invention est mise en oeuvre, pour former les compositions selon l'invention, à une quelconque étape de la fabrication des pesticides biosynthétiques ou de leurs précurseurs éventuels ou de la fabrication des compositions selon l'invention pour autant qu'elle soit postérieure à la fermentation des microorganismes qui génèrent lesdits pesticides.

Un procédé qui convient pour la fabrication des compositions selon l'invention consiste à prélever le milieu de culture des microorganismes générateurs des produits pesticides biosynthétiques, à en séparer l'eau par des techniques habituelles de séparation d'eau telles que la centrifugation, l'ultrafiltration, la précipitation par addition d'un non-solvant tel que l'acétone ou la floculation de manière à obtenir une pâte.

Dans le cas du Bacillus thuringiensis et du Bacillus sphaericus, le milieu de culture est prélevé par exemple à la fin de la phase de sporulation.

Un autre procédé consiste à séparer du milieu de culture des microorganismes générateurs de produits pesticides biosynthétiques, à la fin de la phase de sporulation, des fractions riches en endotoxines ou en spores ou en ces deux produits simultanément. Ces fractions sont ensuite traitées selon les mêmes techniques que celles utilisées pour le traitement des pâtes.

Pour obtenir des compositions sous forme de poudres sèches, on sèche la pâte ainsi obtenue par des techniques habituelles telles que le séchage par atomisation, le séchage par lyophilisation ou le séchage en tambour de manière à obtenir des particules solides contenant en général moins de 15% et de préférence moins de 12% d'eau.

Une autre technique consiste à ajouter la substance et les autres additifs éventuels à la pâte avant de la sécher et à soumettre le mélange au séchage selon l'une ou l'autre des techniques indiquées ci-avant.

Pour obtenir les compositions selon l'invention sous forme de suspensions, on peut disperser les particules solides de pesticide dans une phase liquide qui contient de préférence de l'eau et qui contient en outre la substance ainsi que les autres additifs éventuels, pour former une crème.

Une autre technique consiste à incorporer, dans la pâte obtenue après séparation d'eau du milieu de fermentation, la substance, éventuellement sous la forme d'une solution concentrée, ainsi que les autres additifs éventuels.

La présente invention concerne également un procédé pour l'utilisation des compositions.

Les compositions selon l'invention peuvent être utilisées comme pesticides et plus particulièrement comme agents pour éliminer les insectes à un stade quelconque de leur développement. Pour ce faire, elles sont pulvérisées sur les surfaces infestées, végétaux, fleuves, rivières et toute étendue d'eau selon toutes méthodes connues en elles-mêmes telles que la pulvérisation manuelle, la pulvérisation mécanique et plus particulièrement la pulvérisation par voie aérienne. Elles peuvent notamment être pulvérisées sur les surfaces infestées par des insectes et plus particulièrement par des lépidoptères, des diptères, des coléoptères, des aphaniptères, des orthoptères, des isoptères et des homoptères.

Les doses à mettre en oeuvre sont fonction du pesticide biosynthétique utilisé et de l'agent pathogène à éliminer.

Dans le cas du Bacillus thuringiensis et du Bacillus sphaericus, on pulvérise en général de 50 à 5000 g de particules solides à l'hectare. Les compositions selon l'invention peuvent être pulvérisées telles quelles lorsqu'elles se présentent sous forme de suspensions. Elles peuvent être également dispersées, diluées ou émulsionnées dans un diluant comme l'eau ou un diluant organique tel qu'un produit de la distillation du pétrole (par exemple le gasoil). Dans ce cas, on les dilue par 1 à 300 fois, habituellement 2 à 120 fois et de préférence 4 à 60 fois leur volume de diluant.

Les exemples qui suivent servent à illustrer l'invention.

<u>Exemple 1</u>

Au produit obtenu lors de la culture du Bacillus thuringiensis sérotype 3a3b après sporulation, sont ajoutés 4 pour mille d'une solution à 25% d'orthophénylphénol dans du méthanol, puis 2 pour mille d'acide citrique en poudre.

Le pH de ce produit est ajusté à 4 par addition d'acide phosphorique.

Le produit ainsi obtenu est concentré pour donner une pâte contenant environ 15% de matières sèches.

L'activité insecticide de cette pâte est mesurée à l'aide d'Anagasta kuhniella Z. selon la méthode de titrage biologique de L. Charmoille et coll. (Phytiatrie-Phytopharmacie, 1974, 23, p. 223-234).

On mélange dans 61 l de méthanol 23 kg de parahydroxybenzoate de méthyle et 21 kg d'une solution aqueuse contenant 33% de 1,2-benzisothiazoline-3-one, puis 11 kg d'un agent tensioactif (oxyde d'éthylène sur l'alkylphénol).

6,7 l de ce mélange sont ajoutés par $m^3$ de pâte.

La composition ainsi obtenue présente une activité insecticide identique à celle de la pâte.

Elle est stockée à température ambiante pendant 6 mois.

Une étude de stabilité est effectuée.

Aucun dégagement d'odeur désagréable n'est constaté, le fût contenant la composition n'est pas déformé.

L'activité insecticide a été conservée.

Exemple 2

Un produit obtenu par fermentation du Bacillus thuringiensis, sérotype 14, est traité comme le produit décrit à l'exemple 1.

L'activité de la composition obtenue est mesurée à l'aide d'Aedes aegypti d'après la méthode de titrage biologique de H. de Barjacet I. Larget, WHO-VBC-79.744.

La composition est stockée à température ambiante.

L'étude de stabilité montre que la composition a conservé toute l'activité insecticide durant 18 mois ; aucun dégagement d'odeur désagréable n'est constaté durant ce laps de temps ; la couleur de la composition est restée stable.

Exemple 3

Un produit obtenue par fermentation du Bacillus thuringiensis sérotype 3a3b est traité de manière similaire au produit décrit à l'exemple 1. Ce produit contient environ 15% de matières sèches.

L'étude de la stabilité montre que la composition a gardé toute son activité insecticide durant 15 mois à température ambiante ; aucun dégagement de gaz ni d'odeur désagréable n'est constaté, la couleur n'a pas évolué.

Exemple 4

Un produit obtenu par fermentation du Bacillus thuringiensis sérotype 3a3b est, après sporulation, traité comme le produit décrit à l'exemple 1.

Puis, à la composition obtenue, sont ajoutés 3% en poids de chlorure de sodium, 0,2% en poids d'acide propionique, 0,2% en poids d'acide sorbique et 44,8% en poids d'un concentré aqueux contenant 70% de sorbitol.

Les fûts contenant cette composition n'ont présenté aucune déformation après 6 mois de stockage à température ambiante.

L'activité insecticide a été mesurée après 1 et 6 mois de stockage à température ambiante : aucune variation significative n'est observée.

Exemple 5

Au produit obtenu par fermentation du Bacillus sphaericus sérotype 5a5b, après sporulation, sont ajoutés 4 pour mille d'une solution à 25% d'orthophénylphénol dans du méthanol, puis 2 pour mille d'acide citrique en poudre. Le pH de ce produit est ajusté à 4 par addition d'acide phosphorique concentré.

Le produit ainsi obtenu est concentré pour donner une pâte contenant environ 12% de matière sèche.

On mélange dans 61 l de méthanol, 23 kg de parahydroxybenzoate de méthyle, 11 kg d'agent tensioactif (oxyde d'éthylène sur alkylphénol) et 21 kg d'une solution aqueuse contenant 33% de 1,2-benzisothiazoline-3-one.

6,7 l de ce mélange sont ajoutés par $m^3$ de pâte.

La composition ainsi obtenue est stable au cours du temps.

Les fûts contenant cette composition n'ont présenté aucune déformation après 15 mois de stockage à température ambiante. La couleur de la composition est stable, aucun noircissement n'est observé.

L'activité insecticide est mesurée sur Culex pipiens. Après 15 mois de stockage aucune variation significative n'est observée.

Une numération a été effectuée sur boîtes de Pétri incubées 24 heures à 30°C ; lors de la préparation, la composition contenait $2,1.10^7$ spores viables par mg et après 15 mois, $2,4.10^7$ spores viables par mg.

Exemple 6

Un produit obtenu par fermentation du Bacillus thuringiensis sérotype 7, après sporulation, est traité comme le produit décrit à l'exemple 1.

Une numération de spores viables est effectuée sur boîtes de Pétri contenant un milieu nutritif gélosé favorable à la germination des spores et à la croissance des bactéries et incubées 24 heures à 30°C. Lors de la préparation de la composition, elle contenait $1,3.10^7$ spores par mg. 10 mois après, le nombre de spores n'avait pas varié, aucun dégagement gazeux n'était observé et aucun noircissement n'était constaté.

Exemple 7R (de comparaison)

Un produit obtenu par fermentation du Bacillus thuringiensis sérotype 3a3b est, après sporulation, centrifugé, puis mis à un pH égal à 4 par l'addition d'acide citrique.

A la pâte ainsi obtenue est ajouté 3 pour mille d'un désinfectant amphotère tensioactif contenant des acides aminés à molécules lourdes (marque Tego 103 G).

Après 13 jours de stockage à 30°C, le fût contenant cet échantillon présente un gonflement, le produit dégage une odeur désagréable et commence à noircir.

Exemple 8 et exemples de comparaison 9R et 10R

Un produit obtenu par fermentation du Bacillus thuringiensis sérotype 3a3b, est, après sporulation, centrifugé puis mis à pH ; un échantillon est mis à pH 7,4 ; et un autre échantillon à pH 6 avec de l'acide citrique.

Puis, sont ajoutés à chacun de ces échantillons :

— pour l'exemple 8 selon l'invention :

2 pour mille d'une solution aqueuse contenant 33% de 1,2-benzisothiazoline-3-one et 1 pour mille d'une solution aqueuse contenant 22% de 2,6-di-tert-butyl-4-méthylphénol (BHT) ;

— pour l'exemple de comparaison 9R :

6 pour mille d'une solution aqueuse contenant 10% de chloracétamide et 1 pour mille d'une solution aqueuse contenant 22% de 2,6-di-tert-butyl-4-méthylphénol (BHT) ;

— pour l'exemple de comparaison 10R :

aucun ingrédient supplémentaire.

Ces différents produits sont stockés à 25°C et leur stabilité est observée au cours du temps. Les critères retenus sont les suivants : production de gaz, présence de contaminants par observation au microscope, déformation du flacon contenant l'échantillon, noircissement de l'échantillon. La durée de conservation est évaluée selon l'un de ces critères. Le test a été arrêté après 100 jours.

Les résultats sont donnés au tableau 1.

Tableau 1

| Exemples | 8 | | 9R | | 10R | |
|---|---|---|---|---|---|---|
| pH | 7,4 | 6 | 7,4 | 6 | 7,4 | 6 |
| durée de conservation en jours | 100 | 100 | 3 | 8 | 3 | - |

\- non déterminé.

Exemple 11 et exemple de comparaison 12R

Au produit obtenu par fermentation du Bacillus thuringiensis sérotype 14, après sporulation, on ajoute 2 pour mille d'acide citrique en poudre, puis le pH du produit obtenu est ajusté à 4 avec de l'acide phosphorique à 42%.

Ce produit est centrifugé en vue d'obtenir une pâte concentrée.

Aucun ingrédient supplémentaire n'est ajouté pour l'échantillon de l'exemple de comparaison 12R.

A la pâte correspondant à l'échantillon de l'exemple 11 selon l'invention, sont ajoutés 6,7 l/m$^3$ du mélange alcoolique contenant la 1,2-benzisothiazoline-3-one tel que décrit à l'exemple 1.

Après 16 mois de stockage à température ambiante, la pâte de l'exemple 12R présente un dégagement gazeux et le flacon la contenant est déformé ; alors que la pâte de l'exemple 11 n'a pas évolué et est stable, le flacon la contenant n'est pas déformé.

Exemple 13 et exemple de comparaison 14R

Au produit obtenu par fermentation du Bacillus thuringiensis sérotype 14, après sporulation, on ajoute 2 pour mille d'une solution méthanolique à 25% d'orthophénylphénol. Le pH de cette composition est de 8,2.

A la composition correspondant à l'échantillon de l'exemple 13 selon l'invention, sont ajoutés 6,7 l/m$^3$ du mélange alcoolique contenant la 1,2-benzisothiazoline-3-one tel que décrit à l'exemple 1.

Aucun ingrédient n'est ajouté dans l'échantillon de l'exemple de comparaison 14R.

Après 6 mois de stockage à 25°C, la composition de l'exemple 14R est devenue noire et le flacon la contenant est déformé ; la composition de l'exemple 13 présente une couleur normale et le flacon la contenant n'est pas déformé.

## Revendications

### Revendications pour les Etats contractants suivants : AT, BE, CH, DE, FR, GB, GR, IT, LI, LU, NL, SE

1. Compositions contenant des produits pesticides biosynthétiques, sous la forme de microorganismes viables, sous forme de particules solides en suspension dans un liquide, caractérisées en ce qu'elles contiennent au moins de 0,001 à 10 pour mille en poids de celui des produits pesticides biosynthétiques d'une substance de formule générale (I) :

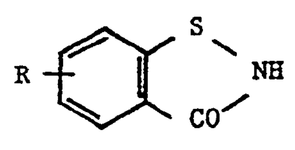 (I)

dans laquelle R représente un hydrogène, un halogène, ou un sel dérivant de cette substance et que le pH des compositions est compris entre 3,5 et 8,5.

2. Compositions selon la revendication 1, caractérisées en ce que R représente l'hydrogène, le chlore, le brome, ou en ce que le sel dérivant de la substance est un sel d'un métal alcalin tel que le sodium ou le potassium, un sel d'ammonium ou un sel d'une base organique telle que la triéthanolamine.

3. Compositions selon la revendication 1 ou 2, caractérisées en ce que la substance est la 1,2-benzisothiazolone-3.

4. Compositions selon l'une quelconque des revendications 1 à 3, caractérisées en ce que le pH des compositions est situé dans des zones de pH acides comprises entre 3,5 et 6,5.

5. Compositions selon l'une quelconque des revendications 1 à 3, caractérisées en ce que le pH des compositions est situé dans des zones de pH neutres comprises entre 6,5 et 7,5.

6. Compositions selon l'une quelconque des revendications 1 à 3, caractérisées en ce que le pH des compositions est situé dans des zones de pH basiques comprises entre 7,5 et 8,5.

7. Compositions selon l'une quelconque des revendications 1 à 6, caractérisées en ce qu'elles contiennent le parahydroxybenzoate de méthyle et/ou l'orthophénylphénol et/ou l'acide citrique.

8. Compositions selon l'une quelconque des revendications 1 à 7, caractérisées en ce que les produits pesticides biosynthétiques proviennent de microorganismes de l'ordre des Bacillacées, tels que des microorganismes des types Bacillus thuringiensis ou Bacillus sphaericus.

9. Procédé pour la fabrication de compositions selon l'une quelconque des revendications 1 à 8, caractérisé en ce qu'on prélève le milieu de culture des microorganismes, on en sépare l'eau de manière à obtenir une pâte et on y incorpore la substance de formule générale (I).

10. Procédé pour éliminer les insectes, caractérisé en ce qu'on pulvérise sur les surfaces infestées les compositions selon l'une quelconque des revendications 1 à 8.

**Revendications pour l'Etat contractant suivant : ES**

1. Procédé pour la fabrication de compositions contenant des produits pesticides biosynthétiques, sous la forme de microorganismes viables, sous forme de particules solides en suspension dans un liquide, caractérisé en ce qu'on prélève le milieu de culture des microorganismes, on en sépare l'eau de manière à obtenir une pâte et on y incorpore au moins de 0,001 à 10 pour mille en poids de celui des produits pesticides biosynthétiques d'une substance de formule générale (I) :

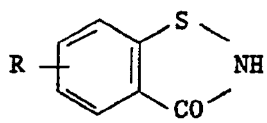 (I)

dans laquelle R représente un hydrogène, un halogène, ou un sel dérivant de cette substance et que le pH des compositions est compris entre 3,5 et 8,5.

2. Procédé selon la revendication 1, caractérisé en ce que R représente l'hydrogène, le chlore, le brome, ou en ce que le sel dérivant de la substance est un sel d'un métal alcalin tel que le sodium ou le potassium, un sel d'ammonium ou un sel d'une base organique telle que la triéthanolamine.

3. Procédé selon la revendication 1 ou 2, caractérisé en ce que la substance incorporée est la 1,2-benzisothiazolone-3.

4. Procédé selon l'une quelconque des revendications 1 à 3, caractérisé en ce que le pH des compositions est situé dans des zones de pH acides comprises entre 3,5 et 6,5.

5. Procédé selon l'une quelconque des revendications 1 à 3, caractérisé en ce que le pH des compositions est situé dans des zones de pH neutres comprises entre 6,5 et 7,5.

6. Procédé selon l'une quelconque des revendications 1 à 3, caractérisé en ce que le pH des compositions est situé dans des zones de pH basiques comprises entre 7,5 et 8,5.

7. Procédé selon l'une quelconque des revendications 1 à 6, caractérisé en ce que l'on incorpore le parahydroxybenzoate de méthyle dans la pâte et/ou l'orthophénylphénol et/ou l'acide citrique dans le milieu de culture des microorganismes.

8. Procédé selon l'une quelconque des revendications 1 à 7, caractérisé en ce que les produits pesticides biosynthétiques proviennent de microorganismes de l'ordre des Bacillacées, tels que des microorganismes des types Bacillus thuringiensis ou Bacillus sphaericus.

9. Procédé pour éliminer les insectes, caractérisé en ce qu'on pulvérise sur les surfaces infestées les compositions obtenues selon l'une quelconque des revendications 1 à 8.

## Patentansprüche

**Patentansprüche für folgende Vertragsstaaten : AT, BE, CH, DE, GB, GR, IT, LI, LU, NL, SE**

1. Zusammensetzungen, die biosynthetische Pestizid-Produkte in Form von lebensfähigen Mikroorganismen enthalten, in Form von festen Teilchen in Suspension in einer Flüssigkeit, dadurch gekennzeichnet, daß sie wenigstens 0,001 bis 10 Promille an Gewicht desjenigen der biosynthetischen Pestizid-Produkte einer Substanz der allgemeinen Formel (I)

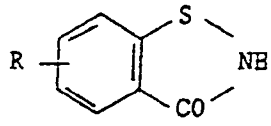 (I)

enthalten, worin R einen Wasserstoff, ein Halogen oder ein von der Substanz abgeleitetes Salz darstellt und, daß der pH der Zusammensetzungen zwischen 3,5 und 8,5 liegt.

2. Zusammensetzungen nach Anspruch 1, dadurch gekennzeichnet, daß R Wasserstoff, Chlor, Brom darstellt oder, daß das von der Substanz abgeleitete Salz ein Salz eines Alkalimetalls, wie Natrium oder Kalium, ein Ammoniumsalz oder ein Salz einer organischen Base, wie Triethanolamin ist.

3. Zusammensetzungen nach Anspruch 1 oder 2, dadurch gekennzeichnet, daß die Substanz 1,2-Benzisothiazolon-3 ist.

4. Zusammensetzungen nach einem der Ansprüche 1 bis 3, dadurch gekennzeichnet, daß der pH der Zusammensetzungen im Bereich von sauren pH-Werten zwischen 3,5 und 6,5 liegt.

5. Zusammensetzungen nach einem der Ansprüche 1 bis 3, dadurch gekennzeichnet, daß der pH der Zusammensetzungen im Bereich von neutralen pH-Werten zwischen 6,5 und 7,5 liegt.

6. Zusammensetzungen nach einem der Ansprüche 1 bis 3, dadurch gekennzeichnet, daß der pH der Zusammensetzungen im Bereich von basischen pH-Werten zwischen 7,5 und 8,5 liegt.

7. Zusammensetzungen nach einem der Ansprüche 1 bis 6, dadurch gekennzeichnet, daß sie Parahydroxy-Methlybenzoat und/oder Orthophenylphenol und/oder Zitronensäure enthalten.

8. Zusammensetzungen nach einem der Ansprüche 1 bis 7, dadurch gekennzeichnet, daß die biosynthetischen Pestizid-Produkte von Mikroorganismen der Ordnung der Bacillaceen, wie Mikroorganismen der Typen Bacillus thuringiensis oder Bacillus sphaericus stammen.

9. Verfahren zur Herstellung von Zusammensetzungen nach einem der Ansprüche 1 bis 8, dadurch gekennzeichnet, daß man das Kulturmedium der Mikroorganismen entnimmt, das Wasser so davon trennt, daß man eine Paste erhält und darin die Substanz der allgemeinen Formel (I) einarbeitet.

10. Verfahren zum Vernichten von Insekten, dadurch gekennzeichnet, daß man auf die infizierten Oberflächen die Zusammensetzungen nach einem der Ansprüche 1 bis 8 versprüht.

## Patentansprüche für folgenden Vertragsstaat : ES

1. Verfahren zur Herstellung von Zusammensetzungen, die biosynthetische Pestizid-Produkte in Form von lebensfähigen Mikroorganismen enthalten, in Form von festen Teilchen in Suspension in einer Flüssigkeit, dadurch gekennzeichnet, daß man das Kulturmedium der Mikroorganismen entnimmt, das Wasser so davon trennt, daß man eine Paste erhält und darin wenigstens 0,001 bis 10 Promille an Gewicht desjenigen der biosynthetischen Pestizid-Produkte einer Substanz der allgemeinen Formel (I)

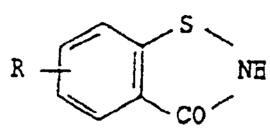 (I)

einarbeitet, worin R einen Wasserstoff, ein Halogen oder ein von der Substanz abgeleitetes Salz darstellt und, daß der pH der Zusammensetzungen zwischen 3,5 und 8,5 liegt.

2. Verfahren nach Anspruch 1, dadurch gekennzeichnet, daß R Wasserstoff, Chlor, Brom darstellt oder, daß das von der Substanz abgeleitete Salz ein Salz eines Alkalimetalls, wie Natrium oder Kalium, ein Ammoniumsalz oder ein Salz einer organischen Base, wie Triethanolamin ist.

3. Verfahren nach Anspruch 1 oder 2, dadurch gekennzeichnet, daß die eingearbeitete Substanz 1,2-Benzisothiazolon-3 ist.

4. Verfahren nach einem der Ansprüche 1 bis 3, dadurch gekennzeichnet, daß der pH der Zusammensetzungen im Bereich von sauren pH-Werten zwischen 3,5 und 6,5 liegt.

5. Verfahren nach einem der Ansprüche 1 bis 3, dadurch gekennzeichnet, daß der pH der Zusammensetzungen im Bereich von neutralen pH-Werten zwischen 6,5 und 7,5 liegt.

6. Verfahren nach einem der Ansprüche 1 bis 3, dadurch gekennzeichnet, daß der pH der Zusammensetzungen im Bereich von basischen pH-Werten zwischen 7,5 und 8,5 liegt.

7. Verfahren nach einem der Ansprüche 1 bis 6, dadurch gekennzeichnet, daß man Parahydroxy-Methylbenzoat in die Paste und/oder Orthophenylphenol und/oder Zitronensäure in das Kulturmedium der Mikroorganismen einarbeitet.

8. Verfahren nach einem der Ansprüche 1 bis 7, dadurch gekennzeichnet, daß die biosynthetischen Pestizid-Produkte von Mikroorganismen der Ordnung der Bacillaceen, wie Mikroorganismen der Typen Bacillus thuringiensis oder Bacillus sphaericus stammen.

9. Verfahren zum Vernichten von Insekten, dadurch gekennzeichnet, daß man auf die infizierten Oberflächen die nach einem der Ansprüche 1 bis 8 erhaltenen Zusammensetzungen versprüht.

## Claims

### Claims for the following Contracting States : AT, BE, CH, DE, GB, GR, IT, LI, LU, NL, SE

1. Compositions containing biosynthetic pesticidal products, in the form of viable microorganisms, in the form of solid particles in suspension in a liquid, characterised in that they contain at least 0.0001 to 1 per cent by weight of that of the biosynthetic pesticidal products of a substance of general formula (I) :

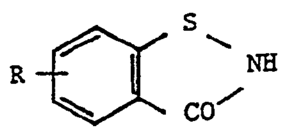 (I)

in which R represents a hydrogen or a halogen, or a salt derived from this substance, and in that the pH of the compositions is between 3.5 and 8.5.

2. Compositions according to Claim 1, characterised in that R represents hydrogen, chlorine or bromine, or in that the salt derived from the substance is a salt of an alkali metal such as sodium or potassium, an ammonium salt or a salt of an organic base such as triethanolamine.

3. Compositions according to Claim 1 or 2, characterised in that the substance is 1,2-benzisothiazol-3-one.

4. Compositions according to any one of Claims 1 to 3, characterised in that the pH of the compositions lies in acid pH ranges of between 3.5 and 6.5.

5. Compositions according to any one of Claims 1 to 3, characterised in that the pH of the compositions lies in neutral pH ranges of between 6.5 and 7.5.

6. Compositions according to any one of Claims 1 to 3, characterised in that the pH of the compositions lies in basic pH ranges of between 7.5 and 8.5.

7. Compositions according to any one of Claims 1 to 6, characterised in that they contain methyl parahydroxybenzoate and/or ortho-phenylphenol and/or citric acid.

8. Compositions according to any one of Claims 1 to 7, characterised in that the biosynthetic pesticidal products originate from microorganisms of the order Bacillaceae, such as microorganisms of the types Bacillus thuringiensis or Bacillus sphaericus.

9. Process for the manufacture of compositions according to any one of Claims 1 to 8, characterised in that the culture medium of the microorganisms is removed, the water is separated from it in such a way as to obtain a paste, and the substance of general formula (I) is incorporated into it.

10. Process for eliminating insects, characterised in that the compositions according to any one of Claims 1 to 8 are sprayed onto the infested surfaces.

### Claims for the following Contracting State : ES

1. Process for the manufacture of compositions containing biosynthetic pesticidal products, in the form of viable microorganisms, in the form of solid particles in suspension in a liquid, characterised in that the culture medium of the microorganisms is removed, the water is separated from it in such a way as to obtain a paste, and at least 0.0001 to 1 per cent by weight of that of the biosynthetic pesticidal products of a substance of general formula (I) :

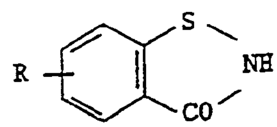 (I)

in which R represents a hydrogen or a halogen, or a salt derived from this substance, is incorporated into it, and in that the pH of the compositions is between 3.5 and 8.5.

2. Process according to Claim 1, characterised in that R represents hydrogen, chlorine or bromine, or in that the salt derived from the substance is a salt of an alkali metal such as sodium or potassium, an ammonium salt or a salt of an organic base such as triethanolamine.

3. Process according to Claim 1 or 2, characterised in that the substance incorporated is 1,2-benzisothiazol-3-one.

4. Process according to any one of Claims 1 to 3, characterised in that the pH of the compositions lies in acid pH ranges of between 3.5 and 6.5.

5. Process according to any one of Claims 1 to 3, characterised in that the pH of the compositions lies in neutral pH ranges of between 6.5 and 7.5.

6. Process according to any one of Claims 1 to 3, characterised in that the pH of the compositions lies in basic pH ranges of between 7.5 and 8.5.

7. Process according to any one of Claims 1 to 6, characterised in that methyl para-hydroxybenzoate is incorporated into the paste and/or ortho-phenylphenol and/or citric acid is incorporated into the culture medium of the microorganisms.

8. Process according to any one of Claims 1 to 7, characterised in that the biosynthetic pesticidal products originate from microorganisms of the order Bacillaceae, such as microorganisms of the types Bacillus thuringiensis or Bacillus sphaericus.

9. Process for eliminating insects, characterised in that the compositions obtained according to any one of Claims 1 to 8 are sprayed onto the infested surfaces.